# EUROPEAN PATENT APPLICATION

(11) **EP 4 811 441 A1**
(43) Date of publication of application: **23.09.2026**
(21) Application number: 26166158.1
(22) Date of filing: 19.03.2026
(51) Int. Cl.: H01M 4/133, H01M 4/587, H01M 10/0525

(54) **ACTIVE MATERIAL, NEGATIVE ELECTRODE SHEET, BATTERY AND ELECTRIC EQUIPMENT**

(30) Priority: 21.03.2025 CN 202510341091
(71) Applicant: Xiamen Hithium Energy Storage Technology Co., Ltd., Xiamen, Fujian 361100 (CN)
(72) Inventor: PENG, Fuxi, Xiamen, 361100 (CN); HE, Chen, Xiamen, 361100 (CN); ZHANG, Qin, Xiamen, 361100 (CN); ZHENG,, Jianming, Xiamen, 361100 (CN); HE, Lihong, Xiamen, 361100 (CN); LI, Saisai, Xiamen, 361100 (CN)
(74) Representative: RGTH

(57) **Abstract**

The present application relates to an active material, a negative electrode sheet, a battery and electric equipment. The active material has a first stability coefficient α1 and a second stability coefficient α2, and the active material satisfies the following relationships: α1 = Dv50 - Dv50', 0 ≤ α1 ≤ 1 µm; and α2 = Dn50 - Dn50', 0 ≤ α2 ≤ 0.04 µm; wherein Dv50 is a particle size of the active material measured when a cumulative volume fraction in volume-based distribution reaches 50%, Dv50' is a particle size of the active material measured when a cumulative volume fraction in volume-based distribution reaches 50% after a 5-ton powder compaction test; Dn50 is a particle size of the active material measured when a cumulative number fraction in number-based distribution reaches 50%; and Dn50' is a particle size of the active material measured when a cumulative number fraction in number-based distribution reaches 50% after a 5-ton powder compaction test.

## Description

### Technical Field

The present application relates to the field of battery technology, and in particular to an active material, a negative electrode sheet, a battery and an electrical equipment.

### Background Art

With the continuous development of energy storage technology, lithium-ion batteries are widely used in various fields, and higher requirements are also imposed on the cycle performance of lithium-ion batteries. Therefore, how to improve the cycle stability of lithium-ion batteries so as to extend the service life of the batteries is an urgent problem to be solved.

### Summary of the Invention

In view of this, the present application provides an active material, a negative electrode sheet, a battery and an electric equipment, wherein the active material has good compressive resistance, so that the battery has good cycle stability.

The present application provides an active material, which has a first stability coefficient α1 and a second stability coefficient α2, and the active material satisfies the following relationships: α1 = Dv50 - Dv50', 0 ≤ α1 ≤ 1 µm; and α2 = Dn 50 - Dn50', 0 ≤ α2 ≤ 0.04 µm; wherein Dv50 is a particle size of the active material measured when a cumulative volume fraction in volume-based distribution reaches 50%, and Dv50' is a particle size of the active material measured when a cumulative volume fraction in volume-based distribution reaches 50% after a 5-ton powder compaction test; Dn50 is a particle size of the active material measured when a cumulative number fraction in number-based distribution reaches 50%; and Dn50' is a particle size of the active material measured when a cumulative number fraction in number-based distribution reaches 50% after a 5-ton powder compaction test.

In an embodiment of the present application, the active material is at least one of artificial graphite and natural graphite, and the active material has a graphitization degree G in the range of 93% ≤ G ≤ 96%.

In an embodiment of the present application, the active material comprises primary particles and secondary particles, wherein the secondary particles are agglomerates of the primary particles. The primary particles have a particle size smaller than that of the secondary particles. A mass fraction W1 of the primary particles in the active material is in the range of 40% ≤ W1 ≤ 95%.

In an embodiment of the present application, a difference γ between a specific surface area of the primary particles and a specific surface area of the secondary particles is in the range of 0.3 m²/g ≤ γ ≤ 0.6 m²/g.

In an embodiment of the present application, a difference β between an initial coulombic efficiency of the primary particles and an initial coulombic efficiency of the secondary particles is in the range of 0 ≤ β ≤ 0.6%.

In an embodiment of the present application, the active material satisfies the range of 10 µm ≤ Dv50 ≤ 15 µm.

In an embodiment of the present application, the active material has a specific surface area S in the range of 1.0 m²/g ≤ S ≤ 2.0 m²/g.

In an embodiment of the present application, the active material has a gravimetric capacity C in the range of 340 mAh/g ≤ C ≤ 360 mAh/g.

The present application provides a negative electrode sheet, which comprises: a negative electrode material layer and a negative electrode current collector layer, wherein the negative electrode material layer is arranged on at least one surface of the negative electrode current collector layer, and the negative electrode material layer comprises the active material provided in the present application.

The present application provides a battery, which comprises: the negative electrode sheet provided in the present application, a separator, a positive electrode sheet and an electrolyte, wherein the separator is arranged on one side of the negative electrode sheet; the positive electrode sheet is arranged on the side of the separator opposite the negative electrode sheet; the electrolyte comprises a film-forming additive comprising a cyclic carbonate additive.

In an embodiment of the present application, the mass fraction of the film-forming additive in the electrolyte is W2, and the battery satisfies the relationship 0 ≤ W2 × α1 × α2 ≤ 4 × 10⁻⁵ µm².

In an embodiment of the present application, the mass fraction W2 of the film-forming additive in the electrolyte is in the range of 0.01% ≤ W2 ≤ 1%.

The present application provides an electric equipment, which comprises an equipment body, and the battery provided in the present application, for powering the equipment body.

In the present application, the first stability coefficient α1 is used to characterize the difference in the volume-based particle size distribution coefficient of the active material before and after powder compaction, and the second stability coefficient α2 is used to characterize the difference in the number-based particle size distribution coefficient of the active material before and after powder compaction. Both the first stability coefficient and the second stability coefficient can be used to characterize the compressive resistance. 5-Ton powder compaction can be used to simulate the compaction of the active material after being applied in a negative electrode sheet. When both the first stability coefficient and the second stability coefficient are small, the active material has good compressive resistance, and the active material can still maintain a relatively intact structure after being subjected to powder compaction. This avoids structural change due to rupture of the active material, so as to avoid exposing more active reaction sites, thereby reducing side reactions between the electrolyte and the active material in the battery. This is conducive to slowing down the attenuation of the battery, thereby improving the cycle performance of the battery and extending the service life of the battery. Specifically, when the first stability coefficient α1 satisfies the range of 0 ≤ α1 ≤ 1 µm, and the second stability coefficient α2 satisfies the range of 0 ≤ α2 ≤ 0.04 µm, both the first stability coefficient α1 and the second stability coefficient α2 satisfy reasonable ranges, and the active material has good structural stability. When the active material is applied in a negative electrode sheet and assembled in a battery, the active material still has a good structural stability after the negative electrode sheet is compacted. The active material has good compressive resistance. This prevents the active material from exposing too many active sites which causes attenuation of the battery. Accordingly, when the active material is applied in the negative electrode sheet and assembled in the battery, the battery has good cycle stability and long service life. When the first stability coefficient is too large and/or the second stability coefficient is too large, the degree of rupture of the active material is large after powder compaction, the structure of the active material collapses during the powder compaction process, and the compressive resistance of the active material is too poor, such that the active material may expose too many active sites after being applied in the negative electrode sheet and compacted, thereby accelerating the attenuation of the battery and shortening the cycle life of the battery.

### Brief Description of the Drawings

In order to more clearly illustrate the technical solutions of the present application, the drawings required for use in the implementation will be briefly introduced below. Obviously, the drawings described below are some embodiments of the present application. For a person having ordinary skills in the art, other drawings can be obtained based on these drawings without inventive work.
Figure 1 is a schematic cross-sectional structure of a negative electrode sheet according to an embodiment of the present application;
Figure 2 is a schematic cross-sectional structure of a battery according to an embodiment of the present application;
Figure 3 shows a comparison of the cycle performances of the batteries of Example 1 and Comparative Example 1;
Figure 4 is a schematic structure of an electric equipment according to an embodiment of the present application;
Figure 5 is a block diagram of the circuit of an electric equipment according to an embodiment of the present application.

Description of reference numbers:
100 - negative electrode sheet, 110 - negative electrode material layer, 111 - active material, 120 - negative electrode current collector layer, 200 - battery, 210 - separator, 220 - positive electrode sheet, 230 - electrolyte, 300 - electric equipment, 310 - equipment body.

### Specific Embodiments

In the following, the technical solutions in the embodiments of the present application will be clearly and completely described by referring to the drawings. Obviously, the described embodiments are only part, not all, of the embodiments of the present application. All other embodiments obtained by a person having ordinary skills in the art based on the embodiments described herein without inventive work are within the scope of protection of the present application.

The terms "first", "second", etc. are used in the Description, the Claims and the above-mentioned drawings of the present application to distinguish different objects, rather than to describe a specific order. In addition, the terms "comprise" and "have" and any variations thereof are intended to be non-exclusive. For example, a process, method, system, product or equipment that comprises a series of steps or units is not limited to the listed steps or units, but optionally comprises steps or units that are not listed, or optionally comprises other steps or units inherent to the process, method, product or equipment.

Reference to "embodiment" herein means that a specific feature, structure, or characteristic described in conjunction with the embodiment may be included in at least one embodiment of the present application. The appearance of this phrase in various locations in the Description does not necessarily refer to the same embodiment, nor is it an independent or alternative embodiment that is mutually exclusive with other embodiments. It would be explicitly and implicitly understood by a person skilled in the art that an embodiment described herein may be combined with other embodiments.

With the continuous development of energy storage technology, lithium-ion batteries are widely used in various fields, and higher requirements are also imposed on the cycle performance of lithium-ion batteries. In lithium-ion batteries, if the stability of the active material is too poor, it may cause attenuation of the battery, thereby affecting the cycle stability of the battery. Therefore, how to improve the cycle stability of lithium-ion batteries so as to extend the service life of the batteries is an urgent problem to be solved.

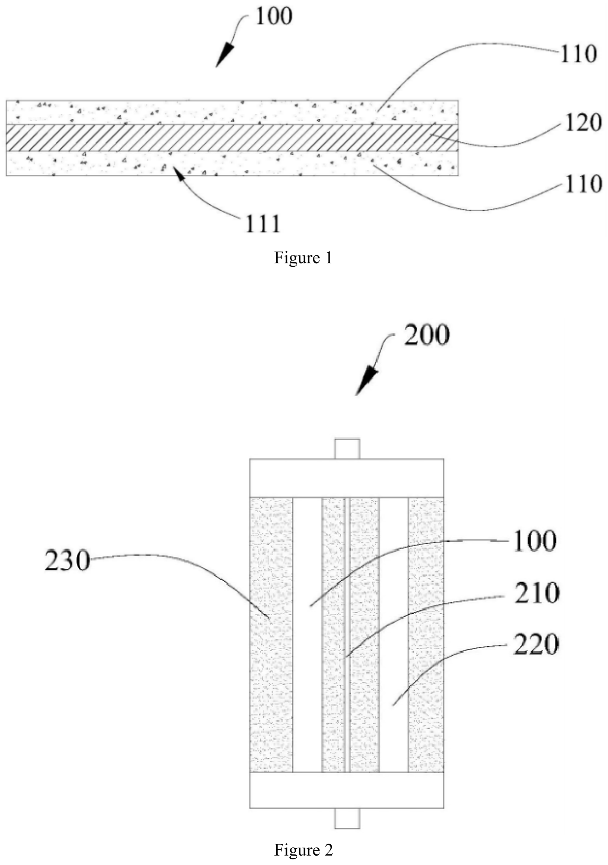

Referring to Figure 1, the present application provides an active material 111, which has a first stability coefficient α1 and second stability coefficient α2, and the active material 111 satisfies the following relationships: α1 = Dv50 - Dv50', 0 ≤ α1 ≤ 1 µm; and α2 = Dn 50 - Dn50', 0 ≤ α2 ≤ 0.04 µm; wherein Dv50 is a particle size of the active material 111 measured when a cumulative volume fraction in volume-based distribution reaches 50%, Dv50' is a particle size of the active material 111 measured when a cumulative volume fraction in volume-based distribution reaches 50% after a 5-ton powder compaction test; Dn50 is a particle size of the active material 111 measured when a cumulative number fraction in number-based distribution reaches 50%; and Dn50' is a particle size of the active material 111 measured when a cumulative number fraction in number-based distribution reaches 50% after a 5-ton powder compaction test.

Specifically, the value of α1 may be, but is not limited to, 0, 0.1 µm, 0.2 µm, 0.3 µm, 0.4 µm, 0.5 µm, 0.6 µm, 0.7 µm, 0.8 µm, 0.9 µm, 1 µm, etc.

Specifically, the value of α2 may be, but is not limited to, 0, 0.001 µm, 0.005 µm, 0.01 µm, 0.015 µm, 0.02 µm, 0.025 µm, 0.03 µm, 0.035 µm, 0.04 µm, etc.

It can be understood that, when the active material 111 is applied in the negative electrode sheet 100 and assembled in the battery 200, the active material 111 acts to store and release active ions. The battery 200 further comprises an electrolyte 230, which acts to output active ions. When the battery 200 is a lithium-ion battery, the active ions are lithium ions.

It can be understood that the first stability coefficient is a particle size stability coefficient for characterizing the difference in the particle size of the active material 111 before and after powder compaction. It is an important parameter for describing whether the active material 111 is ruptured before and after powder compaction. The larger the first stability coefficient is, the weaker the compressive resistance of the active material 111 will be. Conversely, the smaller the first stability coefficient is, the stronger the compressive resistance of the active material 111 will be.

It can be understood that the second stability coefficient is a number-based distribution coefficient for characterizing the difference in the particle size of the active material 111 before and after powder compaction. It is an important parameter for describing whether the active material 111 is ruptured before and after powder compaction. The larger the second stability coefficient is, the weaker the compressive resistance of the active material 111 will be. Conversely, the smaller the second stability coefficient is, the stronger the compressive resistance of the active material 111 will be.

It can be understood that 5-ton powder compaction can be used to simulate the compaction of the active material 111 after being applied in a negative electrode sheet 100. Dv50' and Dn50' are used to characterize the particle size of the active material 111 after it is applied in a negative electrode sheet 100 and compacted.

In this embodiment, the first stability coefficient α1 is used to characterize the difference in the volume-based particle size distribution coefficient of the active material 111 before and after powder compaction, and the second stability coefficient α2 is used to characterize the difference in the number-based particle size distribution coefficient of the active material 111 before and after powder compaction. Both the first stability coefficient and the second stability coefficient can be used to characterize the compressive resistance of the active material 111. 5-Ton powder compaction can be used to simulate the compaction of the active material 111 after being applied in a negative electrode sheet 100. When both the first stability coefficient and the second stability coefficient are small, the active material 111 has good compressive resistance, and the active material 111 can still maintain a relatively intact structure after being subjected to powder compaction. This avoids structural change due to rupture of the active material 111, so as to avoid exposing more active reaction sites, thereby reducing side reactions between the electrolyte 230 and the active material 111 in the battery 200. This is conducive to slowing down the attenuation of the battery 200, thereby improving the cycle performance of the battery 200 and extending the service life of the battery 200. Specifically, when the first stability coefficient α1 satisfies the range of 0 ≤ α1 ≤ 1 µm, and the second stability coefficient α2 satisfies the range of 0 ≤ α2 ≤ 0.04 µm, both the first stability coefficient α1 and the second stability coefficient α2 satisfy reasonable ranges, and the active material 111 has good structural stability. When the active material 111 is applied in the negative electrode sheet 100 and assembled in a battery 200, the active material 111 still has a good structural stability after the negative electrode sheet 100 is compacted. The active material 111 has good compressive resistance. This prevents the active material 111 from exposing too many active sites to cause attenuation of the battery 200. Accordingly, when the active material 111 is applied in the negative electrode sheet 100 and assembled in the battery 200, the battery 200 has good cycle stability and long service life. When the first stability coefficient is too large and/or the second stability coefficient is too large, the degree of rupture of the active material 111 is large after powder compaction, the structure of the active material 111 collapses during the powder compaction process, and the compressive resistance of the active material 111 is too poor, such that the active material 111 may expose too many active sites after being applied in the negative electrode sheet 100 and compacted, thereby accelerating the attenuation of the battery 200 and shortening the cycle life of the battery 200.

Most preferably, the value of the first stability coefficient α1 is 0, and the value of the second stability coefficient α2 is 0.

In some embodiments, the active material 111 is at least one of artificial graphite and natural graphite, and the active material 111 has a graphitization degree G in the range of 93% ≤ G ≤ 96%.

Specifically, the graphitization degree G of the active material 111 may be, but is not limited to, 93%, 93.2%, 93.5%, 93.7%, 94%, 94.2%, 94.5%, 94.7%, 94.8%, 95%, 95.2%, 95.5%, 95%, etc.

It can be understood that the graphitization degree of the active material 111 is an indicator to measure the degree to which carbon atoms form a close-packed hexagonal graphite crystal structure. The closer the lattice size is to the lattice constant of ideal graphite, the higher the graphitization degree is.

In this embodiment, the active material 111 is at least one of artificial graphite and natural graphite. The active material 111 has a similar lamellar structure inside, which is conducive to the embedding and extraction of active ions, so that the active material 111 has good performance. In this embodiment, the graphitization degree of the active material 111 can be used to characterize the regularity of the active material 111. Where the active material 111 has a higher the graphitization degree, there will be fewer stress concentration sites on the surface of the active material 111, the active material 111 will has a higher orientation degree, and the active material 111 will have better compressive resistance. When the graphitization degree G of the active material 111 satisfies the range of 93% ≤ G ≤ 96%, the graphitization degree of the active material 111 is within a reasonable range. On one hand, the orientation degree of the active material 111 is within a reasonable range, so that there are fewer stress concentration sites on the surface of the active material 111, and the active material 111 has good compressive resistance, which facilitates the first stability coefficient α1 of the active material 111 to satisfy the range of 0 ≤ α1 ≤ 1 µm, and the second stability coefficient α2 to satisfy the range of 0 ≤ α2 ≤ 0.04 µm. When the active material 111 is applied in the negative electrode sheet 100 and assembled in the battery 200, the active material 111 has good compressive resistance, and the active material 111 can still maintain a relatively intact structure after powder compaction. This avoids structural change due to rupture of the active material 111, so as to avoid exposing more active reaction sites, thereby reducing side reactions between the electrolyte 230 and the active material 111 in the battery 200, which is conducive to slowing down the attenuation of the battery 200, thereby improving the cycle performance of the battery 200 and extending the service life of the battery 200. On the other hand, the transport performance of lithium ions in the active material 111 is good, which is conducive to making the battery 200 have high energy efficiency. When the graphitization degree of the active material 111 is too large, the graphite sheets of the active material 111 in the active material 111 with a high orientation degree are arranged too orderly, resulting in that the diffusion path of the active ions in the embedding and extraction process becomes single and narrow, which will increase the diffusion resistance of lithium ions and reduce the charge and discharge rate and the rate performance of the battery 200. When the graphitization degree of the active material 111 is too small, the orientation degree of the active material 111 is correspondingly low, which may cause the first stability coefficient α1 and/or the second stability coefficient α2 of the active material 111 to be too large, and the compressive resistance of the active material 111 is too poor. When the active material 111 is applied in the negative electrode sheet 100 and compacted, the active material 111 may expose too many active sites, thereby accelerating the attenuation of the battery 200 and shortening the cycle life of the battery 200.

Optionally, during the preparation of the active material 111, the power supply amount and the power supply time of the graphitization process can be adjusted to adjust the graphitization degree G of the active material 111. Specifically, the power supply amount of the graphitization process is controlled in the range of 5000 kWh/t to 7000 kWh/t, the power supply time is controlled in the range of 40 h to 70 h, and the filler depth is controlled in the range of 60 cm to 130 cm from the upper surface of the graphitization furnace.

Specifically, the power supply amount of the graphitization process may be, but is not limited to, 5000 kWh/t, 5200 kWh/t, 5500 kWh/t, 5800 kWh/t, 6000 kWh/t, 6200 kWh/t, 6500kWh/t, 6800kWh/t, 7000 kWh/t, etc.

Specifically, the power supply time of the graphitization process may be, but is not limited to, 40 h, 42 h, 45 h, 48 h, 50 h, 52 h, 55 h, 58 h, 60 h, 62 h, 65 h, 68 h, 70 h, etc.

In this embodiment, when the power supply amount of the graphitization process is controlled in the range of 5000 kWh/t to 7000 kWh/t, the power supply time is controlled in the range of 40 h to 70 h, and the filler depth is controlled in the range of 60 cm to 130 cm from the upper surface of the graphitization furnace, the graphitization degree G of the active material 111 can satisfy the range of 93% ≤ G ≤ 96%, so that there are fewer stress concentration sites on the surface of the active material 111, and the active material 111 has good compressive resistance, which facilitates the first stability coefficient α1 of the active material 111 to satisfy the range of 0 ≤ α1 ≤ 1 µm, and the second stability coefficient α2 to satisfy the range of 0 ≤ α2 ≤ 0.04 µm. When the active material 111 is applied in the negative electrode sheet 100 and assembled in the battery 200, the active material 111 has good compressive resistance, and the active material 111 can still maintain a relatively intact structure after powder compaction. This avoids structural change due to rupture of the active material 111, so as to avoid exposing more active reaction sites, thereby reducing side reactions between the electrolyte 230 and the active material 111 in the battery 200, which is conducive to slowing down the attenuation of the battery 200, thereby improving the cycle performance of the battery 200 and extending the service life of the battery 200. When the power supply amount of the graphitization process is less than 5000 kWh/t and/or the power supply time is less than 40 h, the graphitization degree of the active material 111 will be low, resulting in poor compressive resistance and low orientation of the active material 111, and excessive active sites being exposed during the compaction process. When the power supply amount of the graphitization process is higher than 7000 kWh/t and/or the power supply time is greater than 70 h, the graphitization degree of the active material 111 is difficult to further increase, and the manufacturing cost increases. In addition, if the filling depth is less than 60 cm, it is easy to cause oxidation of the active material 111, introduce more defects, and reduce the compressive resistance of the active material 111. If the filling depth is higher than 130 cm, the specific surface area of the active material 111 is too low, which is easy to result in poor dynamic performance of the active material 111.

Optionally, in some embodiments, the active material 111 comprises sulfur, and has a sulfur content W3 in the range of 0.3% ≤ W3 ≤ 2.5%.

Specifically, the sulfur content W3 of the active material 111 may be, but is not limited to, 0.3%, 0.4%, 0.5%, 0.6%, 0.8%, 1%, 1.1%, 1.3%, 1.5%, 1.6%, 1.8%, 2%, 2.1%, 2.2%, 2.4%, 2.5%, etc.

In this embodiment, when the sulfur content W3 of the active material 111 satisfies the range of 0.3% ≤ W3 ≤ 2.5%, the sulfur content of the active material 111 is within a reasonable range. The active material 111 has a relatively low sulfur content to prevent sulfur from affecting the nucleation process of graphite or the regularity of the active material 111, so that the active material 111 has good compressive resistance, so that the first stability coefficient α1 of the active material 111 satisfies the range of 0 ≤ α1 ≤ 1 µm, and the second stability coefficient α2 satisfies the range of 0 ≤ α2 ≤ 0.04 µm. When the active material 111 is applied in the negative electrode sheet 100 and compacted, the active material 111 still has good structural integrity to prevent the active material 111 from exposing too many active sites, thereby slowing down the attenuation of the battery 200 and extending the cycle life of the battery 200. When the sulfur content of the active material 111 is too high, the excess sulfur will increase the defects in the graphite sheet structure, thereby reducing the regularity of the active material 111, making the first stability coefficient and the second stability coefficient of the active material 111 too large, which is not conducive to improving the cycle performance of the battery 200. When the sulfur content of the active material 111 is too low, the processing difficulty of the raw material of the active material 111 is increased, thereby increasing the processing cost of the active material 111.

Optionally, in some embodiments, the active material 111 comprises only the primary particles, not the secondary particles; while in other embodiments, the active material 111 comprises only the secondary particles, not the primary particles. In other words, the active material 111 comprises at least one of the primary particles and the secondary particles.

In some embodiments, the active material 111 comprises primary particles and secondary particles, in which the secondary particles are agglomerates of the primary particles, and the primary particles have a particle size smaller than that of the secondary particles. In the active material 111, the mass fraction W1 of the primary particles is in the range of 40% ≤ W1 ≤ 95%.

Specifically, the mass fraction W1 of the primary particles may be, but is not limited to, 40%, 42%, 45%, 48%, 50%, 52%, 55%, 60%, 65%, 68%, 70%, 75%, 78%, 80%, 85%, 90%, 95%, etc.

It can be understood that in the active material 111, the mass fraction of the primary particles is the ratio of the sum of the masses of primary particles to the mass of the active material 111.

It can be understood that there are a plurality of primary particles and a plurality of secondary particles, and the plurality of primary particles and the plurality of secondary particles are mixed and dispersed.

In this embodiment, the active material 111 comprises primary particles and secondary particles, and the primary particles have a particle size smaller than that of the secondary particles. The primary particles are mixed with the secondary particles, so that the active material 111 has a high compaction density, so that the battery 200 has a high energy density. When the mass fraction W1 of the primary particles satisfied the range of 40% ≤ W1 ≤ 95%, the mass fraction of the primary particles and the mass fraction of the secondary particles are both within reasonable ranges. The primary particles and the secondary particles cooperate with each other, so that the active material 111 has good compressive resistance, and at the same time the active material 111 has good electrical performance. When the active material 111 is applied in the negative electrode sheet 100 and assembled in the battery 200, the battery 200 has good energy efficiency and rate performance.

In some embodiments, difference γ between specific surface area of the primary particles and specific surface area of the secondary particles is in the range of 0.3 m²/g ≤ γ ≤ 0.6 m²/g.

Specifically, the γ value may be, but is not limited to, 0.3 m²/g, 0.32 m²/g, 0.35 m²/g, 0.38m²/g, 0.4 m²/g, 0.42 m²/g, 0.45 m²/g, 0.5 m²/g, 0.52 m²/g, 0.53 m²/g, 0.54 m²/g, 0.56 m²/g, 0.58 m²/g, 0.6 m²/g, etc.

In this embodiment, when the difference γ between the specific surface area of the primary particles and the specific surface area of the secondary particles satisfies the range of 0.3 m²/g ≤ γ ≤ 0.6 m²/g, the specific surface area of the primary particles and the specific surface area of the secondary particles are both within reasonable ranges, so that the active material 111 has good compressive resistance, which is conducive to achieving a smaller first stability coefficient and a smaller second stability coefficient of the active material 111, so that the active material 111 has good structural stability. When the active material 111 is applied in the negative electrode sheet 100 and assembled in the battery 200, the active material 111 still has good structural stability after the negative electrode sheet 100 is compacted, and the active material 111 has good compressive resistance. This prevents the active material 111 from exposing too many active sites to cause the attenuation of the battery 200. Accordingly, when the active material 111 is applied in the negative electrode sheet 100 and assembled in the battery 200, the battery 200 has good cycle stability and a longer service life. Furthermore, the primary particles and the secondary particles cooperate with each other, so that the active material 111 has enough active sites to facilitate the embedding and extraction of active ions, and at the same time excessive consumption of the electrolyte 230 in the battery 200 due to excessive active sites of the active material 111 can be avoided, which can further improve the cycle performance of the battery 200. When the difference between the specific surface area of the primary particles and the specific surface area of the secondary particles is too large, i.e. when the specific surface area of the primary particles is too large and/or the specific surface area of the secondary particles is too small, the synergistic effect of the primary particles and the secondary particles is reduced, the uniformity of the active material 111 is reduced, and the probability of the occurrence of side reactions between the electrolyte 230 and the active material 111 may increase, thereby reducing the cycle stability of the battery 200. When the difference between the specific surface area of the primary particles and the specific surface area of the secondary particles is too small, it is difficult for the primary particles and the secondary particles to play a synergistic role, the active material 111 has poor performance in the extraction of lithium ions, such that when the active material 111 is applied in the negative electrode sheet 100, the battery 200 has low energy efficiency and poor rate performance.

In some embodiments, difference β between initial coulombic efficiency of the primary particles and initial coulombic efficiency of the secondary particles is in the range of 0 ≤ β ≤ 0.6%.

Specifically, the β value may be, but is not limited to, 0, 0.05%, 0.1%, 0.15%, 0.2%, 0.25%, 0.3%, 0.36%, 0.4%, 0.45%, 0.5%, 0.55%, 0.6%, etc.

It can be understood that the secondary particles are agglomerates of the primary particles, and the secondary particles are formed by bonding a plurality of primary particles. Accordingly, the impedance of active ion transport in the secondary particles is greater than that in the primary particles, and the initial coulombic efficiency of the primary particles is greater than that of the secondary particles.

In this embodiment, when the difference β between the initial coulombic efficiency of the primary particles and the initial coulombic efficiency of the secondary particles satisfies the range of 0 ≤ β ≤ 0.6%, the initial coulombic efficiency of the primary particles and the initial coulombic efficiency of the secondary particles are both within reasonable ranges. Accordingly, the primary particles and the secondary particles are compounded so that the active material 111 has high initial coulombic efficiency. When the active material 111 is applied in the negative electrode sheet 100 and assembled in the battery 200, the battery 200 has a high energy utilization rate. When the β value is too large, the difference between the initial coulombic efficiency of the primary particles and the initial coulombic efficiency of the secondary particles is too large. In other words, the initial coulombic efficiency of the secondary particles is too small, such that the initial coulombic efficiency of the active material 111 is low. When the active material 111 is applied in the negative electrode sheet 100 and assembled in the battery 200, the energy utilization rate of the battery 200 is low.

In some embodiments, the active material 111 satisfies the range of 10 µm ≤ Dv50 ≤ 15 µm.

It can be understood that Dv50 is a particle size of the active material 111 measured when a cumulative volume fraction in volume-based distribution reaches 50%, and Dv50 is the median particle size of the active material 111.

Specifically, the Dv50 value may be, but is not limited to, 10 µm, 10.5 µm, 10.8 µm, 11 µm, 11.5 µm, 11.8 µm, 12 µm, 12.5 µm, 13 µm, 13.5 µm, 14 µm, 14.5 µm, 15 µm, etc.

It can be understood that when the active material 111 comprises primary particles and secondary particles, the median particle size of the primary particles and the median particle size of the secondary particles both satisfy the range of 10 µm to 15 µm.

In this embodiment, when the active material 111 satisfies the range of 10 µm ≤ Dv50 ≤ 15 µm, the Dv50 value is within a reasonable range. When the active material 111 is applied in the negative electrode sheet 100 and compacted, the active material 111 can still maintain good structural integrity to prevent the active material 111 from exposing too many active sites which exacerbates side reactions between the electrolyte 230 and the active material 111, thereby making the battery 200 have good cycle stability.

In some embodiments, the active material 111 has a specific surface area S in the range of 1.0 m²/g ≤ S ≤ 2.0 m²/g.

Specifically, the specific surface area S of the active material 111 may be, but is not limited to, 1.0 m²/g, 1.1 m²/g, 1.2 m²/g, 1.3 m²/g, 1.4 m²/g, 1.5 m²/g, 1.6 m²/g, 1.7 m²/g, 1.8 m²/g, 1.9 m²/g, 2 m²/g, etc.

It can be understood that the active material 111 has a low first stability coefficient and a low second stability coefficient. Accordingly, the specific surface area of the active material 111 does not change much before and after the active material 111 is compacted. In other words, the specific surface area of the active material 111 satisfies the range of 1.0 m²/g ≤ S ≤ 2.0 m²/g both before and after compaction.

In this embodiment, when the specific surface area S of the active material 111 satisfies the range of 1.0 m²/g ≤ S ≤ 2.0 m²/g, the specific surface area of the active material 111 is within a reasonable range, and the number of active sites exposed in the active material 111 is also within a reasonable range. In addition, the first stability coefficient and the second stability coefficient of the active material 111 are both within reasonable ranges. Accordingly, when the active material 111 is applied in the negative electrode sheet 100 and is subjected to power compaction, the active material 111 still has good structural stability to avoid exposing more active reaction sites, thereby reducing side reactions between the electrolyte 230 and the active material 111 in the battery 200, which is conducive to slowing down the attenuation of the battery 200, thereby improving the cycle performance of the battery 200 and extending the service life of the battery 200. When the specific surface area S of the active material 111 is too large, and the active material 111 is applied in the negative electrode sheet 100 and assembled in the battery 200, side reactions between the active material 111 and the electrolyte 230 are exacerbated, leading to poor cycle stability of the battery 200. When the specific surface area S of the active material 111 is too small, the impedance of lithium ions extracting from and embedding into the active material 111 is increased, thereby reducing the cycle performance of the battery 200.

In some embodiments, the active material 111 has a gravimetric capacity C in the range of 340 mAh/g ≤ C ≤ 360 mAh/g.

Specifically, the gravimetric capacity C of the active material 111 may be, but is not limited to, 340 mAh/g, 342 mAh/g, 345 mAh/g, 350 mAh/g, 352 mAh/g, 355 mAh/g, 358 mAh/g, 360 mAh/g, etc.

In this embodiment, when the gravimetric capacity C of the active material 111 satisfies the range of 340 mAh/g ≤ C ≤ 360 mAh/g, the gravimetric capacity of the active material 111 is within a reasonable range. The active material 111 has a high gravimetric capacity, so that when the active material 111 is applied in the negative electrode sheet 100 and assembled in the battery 200, the negative electrode sheet 100 has a high energy density, and the battery 200 has high capacity and energy efficiency.

The present application provides a negative electrode sheet 100, which comprises: a negative electrode material layer 110 and a negative electrode current collector layer 120, wherein the negative electrode material layer 110 is arranged on at least one surface of the negative electrode current collector layer 120, and the negative electrode material layer 110 comprises the active material 111 provided in the present application.

Optionally, the negative electrode material layer 110 is arranged on at least one surface of the negative electrode current collector layer 120, which means that the negative electrode material layer 110 is arranged on one surface of the negative electrode current collector layer 120, or the negative electrode material layer 110 is arranged on two opposite surfaces of the negative electrode current collector layer 120.

In this embodiment, the negative electrode sheet 100 comprises the active material 111 provided in the present application, which satisfies the following relationships: α1 = Dv50 - Dv50', 0 ≤ α1 ≤ 1 µm; and α2 = Dn50 - Dn50', 0 ≤ α2 ≤ 0.04 µm. The active material 111 has a small first stability coefficient and a small second stability coefficient. The active material 111 has good compressive resistance. The active material 111 can still maintain a relatively intact structure after powder compaction. This avoids structural change due to rupture of the active material 111, so as to avoid exposing more active reaction sites, thereby reducing side reactions between the electrolyte 230 and the active material 111 in the battery 200, which is conducive to slowing down the attenuation of the battery 200, thereby improving the cycle performance of the battery 200 and extending the service life of the battery 200.

Referring to Figure 2, the present application provide a battery 200, which comprises: the negative electrode sheet 100 provided in the present application, a separator 210, a positive electrode sheet 220, and an electrolyte 230, in which the separator 210 is arranged on one side of the negative electrode sheet 100; the positive electrode sheet 220 is arranged on the side of the separator 210 opposite the negative electrode sheet 100; the electrolyte 230 comprises a film-forming additive comprising a cyclic carbonate additive.

It can be understood that the positive electrode sheet 220, the separator 210 and the negative electrode sheet 100 are arranged as a stack.

In this embodiment, the electrolyte 230 is used to immerse at least part of the positive electrode sheet 220, at least part of the separator 210, and at least part of the negative electrode sheet 100, so as to facilitate the transport of active ions. The electrolyte 230 comprises a film-forming additive comprising a cyclic carbonate additive. Comparing with other additives in the electrolyte 230, the cyclic carbonate additive has a higher reducibility, so that the cyclic carbonate additive preferentially forms a film on the surface of the negative electrode sheet 100, which is conducive to maintaining the stability of the interface between the electrolyte 230 and the negative electrode sheet 100. On one hand, the structure of the active material 111 changes to a certain extent after powder compaction, but still has good compressive resistance to avoid exposing too many active sites. On the other hand, the film preferentially formed by the cyclic carbonate additive on the surface of the negative electrode sheet 100 provides further protection to the active material 111, which further slows down side reactions between the active material 111 and the electrolyte 230. In other words, the cyclic carbonate additive has a synergistic effect with the active material 111 in greatly slowing down side reactions between the active material 111 and the electrolyte 230, so that the battery 200 has good cycle stability and long service life.

Optionally, the cyclic carbonate additive is selected from at least one of vinylene carbonate, ethylene carbonate, butylene carbonate and diethyl carbonate.

In some embodiments, the mass fraction of the film-forming additive in the electrolyte 230 is W2, and the battery 200 satisfies the following relationship: 0 ≤ W2 × α1 × α2 ≤ 4 × 10⁻⁵ µm².

Specifically, the valued of W2 × α1 × α2 may be, but is not limited to, 0, 0.06 × 10⁻⁵ µm², 0.12 × 10⁻⁵ µm², 0.35 × 10⁻⁵ µm², 0.46 × 10⁻⁵ µm², 0.68 × 10⁻⁵ µm², 0.8 × 10⁻⁵ µm², 1 × 10⁻⁵ µm², 1.2 × 10⁻⁵ µm², 1.5 × 10⁻⁵ µm², 2 × 10⁻⁵ µm², 2.3 × 10⁻⁵ µm², 2.5 × 10⁻⁵ µm², 2.8 × 10⁻⁵ µm², 3 × 10⁻⁵ µm², 3.1 × 10⁻⁵ µm², 3.5 × 10⁻⁵ µm², 4 × 10⁻⁵ µm², etc.

In this embodiment, when the battery 200 satisfies the relationship 0 ≤ W2 × α1 × α2 ≤ 4 × 10⁻⁵ µm², the mass fraction of the film-forming additive, the α1 value and the α2 value are all within reasonable ranges, and the film-forming additive and the active material 111 have a good synergistic effect in slowing down side reactions between the electrolyte 230 and the negative electrode sheet 100, so that the battery 200 has both good cycle stability and high charge and discharge efficiency. On one hand, the first stability coefficient α1 and the second stability coefficient α2 of the active material 111 are within reasonable ranges, so that the active material 111 has good structural stability. When the active material 111 is applied in the negative electrode sheet 100 and compacted, the active material 111 still has good structural stability. The active material 111 has good compressive resistance, preventing the active material 111 from exposing too many active sites and causing attenuation of the battery 200. Accordingly, when the active material 111 is applied in the negative electrode sheet 100 and assembled in the battery 200, the battery 200 has good cycle stability and long service life. On the other hand, the mass fraction of the film-forming additive is within a reasonable range, and the film-forming additive can preferentially form a film on the surface of the negative electrode sheet 100 to protect the active material 111 that undergoes structural change after powder compaction, thereby slowing down side reactions between the active material 111 and the electrolyte 230, ensuring the exertion of the electrical performance of the active material 111, so that the battery 200 has good cycle stability. When the value of W2 × α1 × α2 is too large, the first stability coefficient α1 and the second stability coefficient α2 of the active material 111 are too large, or the mass fraction of the film-forming additive is too large. When the first stability coefficient α1 and/or the second stability coefficient α2 of the active material 111 are too large, the degree of rupture of the active material 111 after powder compaction is large, the structure of the active material 111 is severely collapsed and ruptured during the powder compaction process, and the active material 111 has poor compressive resistance, such that when the active material 111 is applied in the negative electrode sheet 100 and compacted, the active material 111 may expose too many active sites, thereby exacerbating the attenuation of the battery 200, and shortening the cycle life of the battery 200. When the mass fraction of the film-forming additive is too large, the internal resistance of the battery 200 may increase, thereby reducing the charge and discharge efficiency of the battery 200. When the value of W2 × α1 × α2 is too large, if the first stability coefficient and the second stability coefficient of the active material 111 are too large, the active material 111 is severely ruptured during the compaction process. Even if a large amount of the film-forming additive is added, the dynamic balance of the interface film cannot be reached. In addition, if the mass fraction of the film-forming additive is too large, the electrical performance of the battery 200 will be deteriorated.

In some embodiments, the mass fraction W2 of the film-forming additive in the electrolyte 230 is in the range of 0.01% ≤ W2 ≤ 1%.

Specifically, the mass fraction W2 of the film-forming additive may be, but is not limited to, 0.01%, 0.05%, 0.1%, 0.15%, 0.18%, 0.2%, 0.22%, 0.25%, 0.3%, 0.4%, 0.5%, 0.55%, 0.6%, 0.7%, 0.8%, 0.9%, 1%, etc.

In this embodiment, when the mass fraction W2 of the film-forming additive satisfied the range of 0.01% ≤ W2 ≤ 1%, the mass fraction of the film-forming additive is within a reasonable range. On one hand, the film-forming additive can preferentially form a film on the surface of the negative electrode sheet 100 to protect the active material 111 that undergoes structural change after powder compaction, thereby slowing down side reactions between the active material 111 and the electrolyte 230, ensuring the exertion of the electrical performance of the active material 111, so that the battery 200 has good cycle stability. On the other hand, increase of the internal resistance of the battery 200 due to excessive film-forming additive can be avoided, which is conducive to increase of the charge and discharge efficiency of the battery 200, so that the battery 200 has good performance. When the mass fraction of the film-forming additive is too large, the internal resistance of the battery 200 may be increased, thereby reducing the charge and discharge efficiency of the battery 200. When the mass fraction of the film-forming additive is too small, and the active material 111 is applied in the negative electrode sheet 100 and compacted, part of the active material 111 has its structure ruptured during the compaction process even if the active material 111 has high compressive resistance. It is difficult for the film-forming additive to form a film on the surface of the negative electrode sheet 100 and protect the negative electrode sheet 100. It is difficult for the film-forming additive to slow down side reactions between the electrolyte 230 and the negative electrode plate 100, thereby reducing the cycle performance of the battery 200.

The technical solutions of the present application are further illustrated in the following by means of multiple examples.

Examples 1 to 6 and Comparative Examples 1 to 3:

### 1. Preparation of negative electrode sheet 100:

### (1) Preparation of active material 111:

A petroleum coke with a sulfur content of 0.3% to 2.5% was selected. After a shaping process, the median particle size of the petroleum coke was controlled to be between 9 µm and 14 µm. The parameters controlled in the shaping process can mainly reflect the regularity of the material and reduce the number of stress concentration sites on the surface of the material, thereby improving the compressive resistance of the material. After a graphitization process, an intermediate material was obtained, and the graphitization degree of the intermediate material was controlled between 93% and 96%. The graphitization degree of the intermediate material can reflect the surface defect degree and the orientation degree of the intermediate material. The higher the orientation degree is, the better the compressive resistance of the intermediate material is. After a final finishing process, the active materials 111 of Examples 1 to 6 were obtained.

The sulfur content W3, the median particle size Dv50, and the graphitization degree G of the active materials 111 of Examples 1 to 6 are shown in Table 1.

The first stability coefficient α1 and the second stability coefficient α2 of the active material 111 were tested as follows: the particle size distribution of the active material 111 was measured using a laser diffraction particle size distribution measuring instrument (Malvern Mastersizer 3000) according to the particle size distribution laser diffraction method GB/T19077-2016 to give Dv50, Dv50', Dn50 and Dn50' values, the α1 value was obtained by the equation α1 = Dv50 - Dv50', and the α2 value was obtained by the equation α2 = Dn50 - Dn50'. The values of the first stability coefficient α1 and the values of the second stability coefficient α2 of the active materials 111 of Examples 1 to 6 and Comparative Examples 1 to 3 are shown in Table 1.

### (2) Preparation of negative electrode sheet 100:

0.5% by mass of carboxymethyl cellulose and 1.7% by mass of a binder were sufficiently dissolved in water, to which were added 0.8% by mass of carbon black as a conductive agent and 97% by mass of the active material 111 to make a uniformly dispersed slurry. The slurry was evenly coated on a surface of the negative electrode current collector layer 120 (copper foil), and then transferred to a vacuum drying oven for complete drying. The slurry formed the negative electrode material layer 110, thereby giving the negative electrode sheets 100 of Examples 1 to 6 and Comparative Examples 1 to 3.

Among them, the active material 111 of Example 1 was applied in the negative electrode sheet 100 of Example 1, the active material 111 of Example 2 was applied in the negative electrode sheet 100 of Example 2, the active material 111 of Comparative Example 1 was applied in the negative electrode sheet 100 of Comparative Example 1, and so on.

### 2. Preparation of positive electrode sheet 220:

Lithium iron phosphate as the positive electrode active material 111, conductive carbon black (SP) as the positive electrode conductive agent, and polyvinylidene fluoride (PVDF) as the positive electrode binder were dispersed in N-methylpyrrolidone (NMP) as the solvent in a mass ratio of 97:0.5:2.5. The positive electrode slurry was coated on the positive electrode collector layer (aluminum foil). After drying, cold pressing, slitting, and cutting, the positive electrode material layer was obtained to give the positive electrode sheet 220.

### 3. Preparation of electrolyte 230:

In a glove box under an argon atmosphere with a moisture content of ≤ 1 ppm, ethylene carbonate (EC), diethyl carbonate (DEC), and ethyl methyl carbonate (EMC) were mixed in a mass ratio of 1:1:1. Then a dry lithium salt, lithium hexafluorophosphate, was dissolved in the solvent, stirred until completely and uniformly dissolved. A film-forming additive (vinylidene carbonate) was added and mixed evenly to give the electrolytes 230 of Examples 1 to 6 and Comparative Examples 1 to 3.

Among them, the values of the mass fractions W2 of the film-forming additives in the electrolytes 230 and the values of W2 × α1 × α2 of Examples 1 to 6 and Comparative Example 1 to 3 are shown in Figure 1.

### 4. Preparation of separator 210:

A 16 µm polyethylene film was used as the separator 210.

### 5. Preparation of battery 200:

The prepared positive electrode sheet 220, separator 210, and negative electrode sheet 100 were stacked in sequence so that the separator 210 was located between the positive electrode sheet 220 and the negative electrode sheet 100. A jelly roll was obtained after winding. After welding the tabs, the jelly roll was assembled into an outer package. After injecting the prepared electrolyte 230, the battery cell was packaged, allowed to stand, formed, shaped, and capacity tested, etc., and the batteries of Examples 1 to 6 and Comparative Examples 1 to 3 were finally prepared.

Among them, the electrolyte 230 of Example 1 was applied in the battery of Example 1, the electrolyte 230 of Example 2 was applied in the battery of Example 2, the electrolyte 230 of Comparative Example 1 was applied in the battery of comparative Example 1, and so on.

The performance parameters of the active material 111 and of the electrolytes 230 of Examples 1 to 6 and Comparative Examples 1 to 3 are shown in Table 1 below.

**Table 1: Performance parameters of the active material 111 and of the electrolytes 230 of Examples 1 to 6 and Comparative Examples 1 to 3.**

| Ex. & Com. Ex. | Sulfur content W3 (%) | Dv50 (µm) | Power supply amount (kWh/t) | Power supply time (h) | Filler depth (cm) | Graphitization degree G (%) | α1 (µm) | α2 (µm) | W2 (%) | W2 × α1 × α2 (µm²) |
|---|---|---|---|---|---|---|---|---|---|---|
| Ex. 1 | 0.31 | 9.1 | 5000 | 40 | 60 | 93.1 | 0 | 0 | 0.01 | 0 |
| Ex. 2 | 0.5 | 10.4 | 5200 | 53 | 85 | 93.6 | 0.2 | 0.01 | 0.03 | 0.06 × 10⁻⁵ |
| Ex. 3 | 1.3 | 10.9 | 5600 | 58 | 98 | 94.2 | 0.5 | 0.013 | 0.05 | 0.33 × 10⁻⁵ |
| Ex. 4 | 1.7 | 11.3 | 6100 | 62 | 115 | 94.8 | 0.7 | 0.025 | 0.06 | 1.05 × 10⁻⁵ |
| Ex. 5 | 2.1 | 12.6 | 6500 | 65 | 121 | 95.1 | 0.9 | 0.034 | 0.08 | 2.45 × 10⁻⁵ |
| Ex. 6 | 2.5 | 13.8 | 7000 | 70 | 130 | 95.7 | 1 | 0.04 | 0.10 | 4 × 10⁻⁵ |
| Com. Ex. 1 | 0.31 | 9.1 | 4500 | 40 | 60 | 92.7 | 1.2 | 0.01 | 0 | 0 |
| Com. Ex. 2 | 0.5 | 10.4 | 5000 | 35 | 60 | 92.5 | 0.5 | 0.06 | 0 | 0 |
| Com. Ex. 3 | 1.3 | 10.9 | 4500 | 35 | 60 | 92.0 | 1.3 | 0.07 | 0.15 | 13.65 × 10⁻⁵ |

In addition, after a graphitization process, the active materials 111 were obtained, and the mass fraction W1 of the primary particles in the active materials 111, the difference γ between the specific surface area of the primary particles and the specific surface area of the secondary particles, and the difference β between the initial coulombic efficiency of the primary particles and the initial coulombic efficiency of the secondary particles were measured. The values of these parameters for the active materials 111 of Examples 1 to 6 and Comparative Examples 1 to 3 are shown in Table 2.

**Table 2: Other parameters of the active materials 111 of Examples 1 to 6 and Comparative Examples 1 to 3.**

| Ex. & Com. Ex. | W1 (%) | γ (m²/g) | β (%) |
|---|---|---|---|
| Ex. 1 | 90 | 0.58 | 0.57 |
| Ex. 2 | 83 | 0.52 | 0.44 |
| Ex. 3 | 72 | 0.47 | 0.38 |
| Ex. 4 | 61 | 0.44 | 0.31 |
| Ex. 5 | 52 | 0.41 | 0.29 |
| Ex. 6 | 43 | 0.35 | 0.12 |
| Com. Ex. 1 | 90 | 0.58 | 0.57 |
| Com. Ex. 2 | 83 | 0.52 | 0.44 |
| Com. Ex. 3 | 72 | 0.47 | 0.38 |

### Performance test of battery 200:

Performance test of the batteries of Examples 1 to 6 and Comparative Examples 1 to 3:
At 25°C, constant power charge and discharge cycle tests were performed for the batteries of Examples 1 to 6 and Comparative Examples 1 to 3 on a charge and discharge instrument. The charge and discharge rate was 0.5P, the charge and discharge voltage window was 2.5V to 3.65V, and the charge and discharge cycle was repeated until the capacity of battery 200 was less than 80% of the initial capacity, and the number of cycles was recorded.

The capacity retention rate after 500 cycles was calculated using the following equation: capacity retention rate after the 500th cycle = (discharge capacity after the 500th cycle/discharge capacity of the first cycle) × 100%.

A complete charge and discharge is usually called a charge and discharge cycle, and N cycles means repeating the above process N times.

The capacity retention rates after 500 cycles at 25°C for the batteries of Examples 1 to 6 and Comparative Examples 1 to 3 are shown in Table 3.

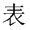 3: Performances of the batteries of Examples 1 to 6 and Comparative Examples 1 to 3

| Ex. & Com. Ex. | Capacity retention rate after 500 cycles at 25°C (%) |
|---|---|
| Ex. 1 | 94.9 |
| Ex. 2 | 94.8 |
| Ex. 3 | 94.6 |
| Ex. 4 | 94.3 |
| Ex. 5 | 94.4 |
| Ex. 6 | 93.9 |
| Com. Ex. 1 | 92.1 |
| Com. Ex. 2 | 89.6 |
| Com. Ex. 3 | 88.5 |

Referring to Tables 1 to 3, the capacity retention rates of the batteries of Examples 1 to 6 after 500 cycles at 25°C are all higher than the capacity retention rates of the batteries of Comparative Examples 1 to 3 after 500 cycles at 25°C. The reasons are as follows: in Examples 1 to 6, the sulfur content W3 of the active material 111 satisfies the range of 0.3% ≤ W3 ≤ 2.5%, the Dv50 value of the active material 111 satisfies the range of 10 µm ≤ Dv50 ≤ 15 µm, the graphitization degree G of the active material 111 satisfies the range of 93% ≤ G ≤ 96%, and the mass fraction W2 of the film-forming additive in the electrolyte 230 satisfies the range of 0.01% ≤ W2 ≤ 1%, so that the active material 111 has good compressive strength, the first stability coefficient α1 of the active material 111 satisfies the range of 0 ≤ α1 ≤ 1 µm, and the second stability coefficient satisfies the range of 0 ≤ α2 ≤ 0.04 µm. In addition, the battery 200 also satisfies the relationship 0 ≤ W2 × α1 × α2 ≤ 4×10⁻⁵ µm². In the batteries of Examples 1 to 6, the active material 111 has good compressive resistance. When the active material 111 is applied in the negative electrode sheet 100 and assembled in the battery 200, the active material 111 can still maintain a relatively intact structure after powder compaction, avoiding structural change due to rupture of the active material 111. This avoids exposing more active reaction sites, thereby reducing side reactions between the electrolyte 230 and the active material 111 in the battery 200, which is conducive to slowing down the attenuation of the battery 200, thereby improving the cycle performance of the battery 200 and extending the service life of the battery 200. In Comparative Example 1, the Dv50 value of the active material 111 is too large, and the power supply amount during the graphitization process of the active material 111 is too small, such that the graphitization degree of the active material 111 is too low, and the value of the first stability coefficient α1 of the active material 111 is too large. In other words, the structural stability of the active material 111 deteriorates, and the structure of the active material 111 is ruptured after compaction and too many sites are exposed. In addition, the electrolyte 230 of Comparative Example 1 does not comprise the cyclic carbonate additive, and it is difficult to protect the active material 111 whose structure has been ruptured, thereby exacerbating side reactions between the electrolyte 230 and the negative electrode sheet 100, leading to low cycle capacity retention rate of the battery of Comparative Example 1. In Comparative Example 2, the power supply time during the graphitization process of the active material 111 is too short, such that the graphitization degree of the active material 111 is too low. Correspondingly, the orientation degree of the active material 111 is low, resulting in the second stability coefficient α2 of the active material 111 being too large, so that the structural stability and compressive resistance of the active material 111 are poor. The structure of the active material 111 is ruptured after compaction and too many sites are exposed. In addition, the electrolyte 230 of Comparative Example 2 does not comprise the cyclic carbonate additive, and it is difficult to protect the active material 111 whose structure has been ruptured, thereby exacerbating side reactions between the electrolyte 230 and the negative electrode sheet 100, leading to low cycle capacity retention rate of the battery of Comparative Example 2. Considering the data for the batteries of Comparative Examples 1 and 2 in combination, it can be seen that the active material 111 and the film-forming additive have a synergistic effect, which can effectively improve the cycle stability of the corresponding battery 200. In Comparative Example 3, the power supply amount during the graphitization process of the active material 111 is too small, and the power supply time is too short, such that the first stability coefficient and the second stability coefficient of the active material 111 and the mass fraction of the film-forming additive are all too large, resulting in an excessively large value of W2 × α1 × α2, which results in significantly lower cycle stability of the battery of Comparative Example 3 than that of the other batteries 200. The reasons are as follows: the first stability coefficient and the second stability coefficient of the active material 111 are both large, such that too many active sited are exposed after the active material 111 is compacted, which exacerbates side reactions between the negative electrode sheet 100 and the electrolyte 230. In addition, although the film-forming additive can protect the active material 111 whose structure has been ruptured, too much film-forming additive increases the internal resistance of the battery of Comparative Example 3, leading to poor cycle performance of the battery of Comparative Example 3. Furthermore, the granulation effect of the active material 111 of Comparative Example 3 is poor. The granulation effect refers to the fact that the particle structure, particle size distribution, morphology and performance of the active material 111 after the secondary granulation process fail to reach the ideal state or design requirements. In other words, the active material 111 fails to achieve the expected optimization goal in the secondary granulation process, resulting in poor structural stability of the active material 111.

Furthermore, as can be seen from the date of Examples 1 to 6 and Comparative Examples 1 to 3 that the graphitization degree of the active material 111 gradually increases with the increases of the power supply amount and power supply time during the graphitization process and the increase of the filler depth.

Furthermore, referring to Tables 1 and 2, in the active materials 111 of Examples 1 to 6, the mass fraction W1 of the primary particles satisfies the range of 40% ≤ W1 ≤ 95%, the difference γ between the specific surface area of the primary particles and the specific surface area of the secondary particles is in the range of 0.3 m²/g ≤ γ ≤ 0.6 m²/g, and the difference β between the initial coulombic efficiency of the primary particles and the initial coulombic efficiency of the secondary particles satisfies the range of 0 ≤ β ≤ 0.6%. The primary particles and the secondary particles cooperate with each other, so that the active material 111 has good compressive resistance, and at the same time the active material 111 has good electrical performance. It can be understood that the mass fraction W1 of the primary particles, the difference γ between the specific surface area of the primary particles and the specific surface area of the secondary particles, and the difference β between the initial coulombic efficiency of the primary particles and the initial coulombic efficiency of the secondary particles are obtained only after graphite is sintered and graphitized. Therefore, it is impossible to design control variables of such parameters during the preparation process. The data in Table 2 only characterize the parameters of the active material 111 to show that the active material 111 has both good compressive resistance and electrical performance, and also helps to improve the cycle stability of the corresponding battery 200.

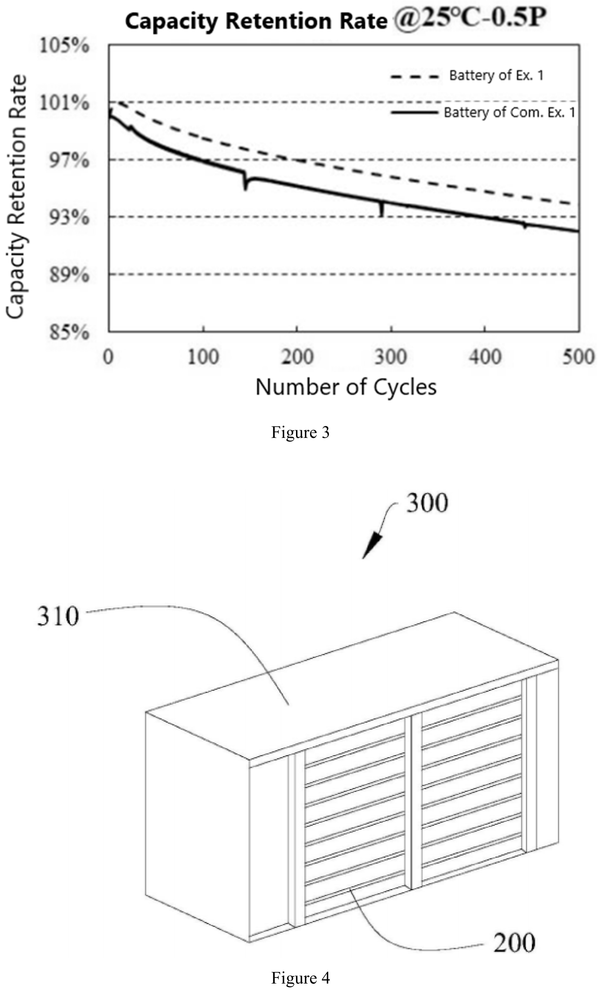

Furthermore, referring to Figure 3, which shows a comparison of the cycle performances of the batteries of Example 1 and Comparative Example 1. As can be seen from Figure 3, with the increase in the number of cycles, the cycle capacity retention rates of the batteries of Example 1 and Comparative Example 1 gradually decrease, but correspondingly, the cycle capacity retention rate of the battery of Example 1 is always higher than the cycle capacity retention rate of the battery of Comparative Example 1, which indicates that the battery of Example 1 has better cycle stability than the battery of Comparative Example 1.

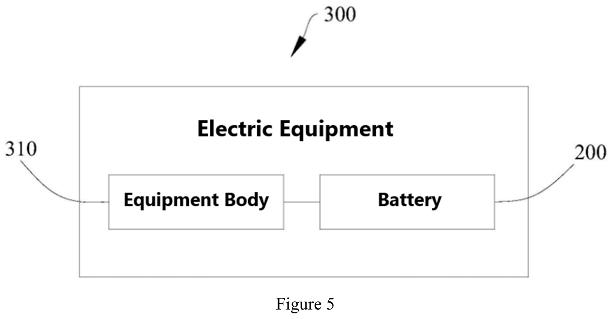

Referring to Figures 4 and 5, the present application provides an electric equipment 300, which comprises an equipment body 310, and the battery 200 provided in the present application, for powering the equipment body 310.

It can be understood that the battery 200 and the equipment body 310 are electrically connected.

In this embodiment, the battery 200 comprises the active material 111 and the electrolyte 230 provided in the present application, the active material 111 has a relatively low first stability coefficient and a relatively low second stability coefficient, and the electrolyte 230 comprises a cyclic carbonate additive. The active material 111 and the electrolyte 230 have a good synergistic effect, and can greatly slow down side reactions of the active material 111 and the electrolyte 230, so that the battery 200 has good cycle stability, and the battery 200 has long service life. Furthermore, the battery 200 can provide stable electric energy for the equipment body 310, which is conducive to improving the user experience.

Optionally, the electric equipment 300 of the present application may be, but is not limited to, a portable electronic device such as a mobile phone, a tablet computer, a laptop computer, a desktop computer, a smart bracelet, a smart watch, an e-reader, a game console, etc. It may also be a vehicle such as a car, a truck, a wagon, a lorry, a truck, a bullet train, a high-speed train, an electric bicycle, etc. In addition, it may also be various household appliances, etc. The electric equipment 300 shown in Figure 4 of the present application is an energy storage battery cabinet.

It can be understood that the electric equipment 300 described in this embodiment is merely a form of the electric equipment 300 in which the battery 200 is used, and should not be understood as a limitation on the electric equipment 300 provided in the present application, nor should it be understood as a limitation on the electric equipment 300 provided in various embodiments of the present application.

Reference to "embodiment" herein means that a specific feature, structure, or characteristic described in conjunction with the embodiment may be included in at least one embodiment of the present application. The appearance of this phrase in various locations in the Description does not necessarily refer to the same embodiment, nor is it an independent or alternative embodiment that is mutually exclusive with other embodiments. It would be explicitly and implicitly understood by a person skilled in the art that an embodiment described herein may be combined with other embodiments. In addition, it should also be understood that the features, structures or characteristics described in various embodiments of the present application can be arbitrarily combined to form another embodiment that does not depart from the spirit and scope of the technical solutions of the present application, provided that there is no contradiction among them.

Finally, it should be noted that the above embodiments are only used to illustrate the technical solutions of the present application and are not intended to limit the same. Although the present application has been described in detail with reference to the above preferred embodiments, a person having ordinary skills in the art should understand that the technical solution of the present application may be modified or replaced by equivalents without departing from the spirit and scope of the technical solutions of the present application.

## Claims

1. An active material (111), **characterized in that** the active material (111) has a first stability coefficient α1 and a second stability coefficient α2, and the active material (111) satisfies the following relationships: α1 = Dv50 - Dv50', 0 ≤ α1 ≤ 1 µm; and α2 = Dn 50 - Dn50', 0 ≤ α2 ≤ 0.04 µm;
wherein Dv50 is a particle size of the active material (111) measured when a cumulative volume fraction in volume-based distribution reaches 50%, and Dv50' is a particle size of the active material (111) measured when a cumulative volume fraction in volume-based distribution reaches 50% after a 5-ton powder compaction test; and
Dn50 is a particle size of the active material (111) measured when a cumulative number fraction in number-based distribution reaches 50%; and Dn50' is a particle size of the active material (111) measured when a cumulative number fraction in number-based distribution reaches 50% after a 5-ton powder compaction test.

2. The active material (111) according to claim 1, **characterized in that** the active material (111) is at least one of artificial graphite and natural graphite, and the active material (111) has a graphitization degree G in a range of 93% ≤ G ≤ 96%.

3. The active material (111) according to claim 1, **characterized in that** the active material (111) comprises primary particles and secondary particles, the secondary particles are agglomerates of the primary particles, the primary particles have a particle size smaller than that of the secondary particles, and a mass fraction W1 of the primary particles in the active material (111) is in a range of 40% ≤ W1 ≤ 95%.

4. The active material (111) according to claim 3, **characterized in that** a difference γ between a specific surface area of the primary particles and a specific surface area of the secondary particles is in a range of 0.3 m²/g ≤ γ ≤ 0.6 m²/g.

5. The active material (111) according to claim 3, **characterized in that** a difference β between an initial coulombic efficiency of the primary particles and an initial coulombic efficiency of the secondary particles is in a range of 0 ≤ β ≤ 0.6%.

6. The active material (111) according to any one of claims 1 to 5, **characterized in that** the active material (111) satisfies a range of 10 µm ≤ Dv50 ≤ 15 µm.

7. The active material (111) according to any one of claims 1 to 5, **characterized in that** the active material (111) has a specific surface area S in a range of 1.0 m²/g ≤ S ≤ 2.0 m²/g.

8. The active material (111) according to any one of claims 1 to 5, **characterized in that** the active material (111) has a gravimetric capacity C in a range of 340 mAh/g ≤ C ≤ 360 mAh/g.

9. A negative electrode sheet (100), **characterized in that** the negative electrode sheet (100) comprises a negative electrode material layer (110) and a negative electrode current collector layer (120), the negative electrode material layer (110) is arranged on at least one surface of the negative electrode current collector layer (120), and the negative electrode material layer (110) comprises an active material (111) according to any one of claims 1 to 8.

10. A battery (200), **characterized in that** the battery (200) comprises:
the negative electrode sheet (100) according to claim 9;
a separator (210) which is arranged on one side of the negative electrode sheet (100);
a positive electrode sheet (220) which is arranged on the side of the separator (210) opposite the negative electrode sheet (100); and
an electrolyte (230) which comprises a film-forming additive comprising a cyclic carbonate additive.

11. The battery (200) according to claim 10, **characterized in that** a mass fraction of the film-forming additive in the electrolyte (230) is W2, and the battery (200) satisfies the relationship 0 ≤ W2 × α1 × α2 ≤ 4 × 10⁻⁵ µm².

12. The battery (200) according to claim 11, **characterized in that** the mass fraction W2 of the film-forming additive in the electrolyte (230) is in a range of 0.01% ≤ W2 ≤ 1%.

13. An electric equipment (300), **characterized in that** the electric equipment (300) comprises:
an equipment body (310); and
a battery (200) according to any one of claims 10 to 12, for powering the equipment body (310).
